# EUROPÄISCHE PATENTSCHRIFT

(11) **EP 1 151 221 B1**
(45) Veröffentlichungstag und Bekanntmachung des Hinweises auf die Patenterteilung: **20.08.2003**
(21) Anmeldenummer: 00905050.1
(22) Anmeldetag: 10.02.2000
(51) Int. Cl.: F16L 51/02

(54) **KOMPENSATOR ZUM AUSGLEICH VON WÄRMEDEHNUNGEN**
COMPENSATOR FOR COMPENSATING THERMAL EXPANSIONS
COMPENSATEUR POUR LA COMPENSATION DE DILATATIONS THERMIQUES

(30) Priorität: 11.02.1999 DE 19905649
(43) Veröffentlichungstag der Anmeldung: 07.11.2001
(73) Patentinhaber: KHD Humboldt-Wedag AG, 51103 Köln (DE)
(72) Erfinder: SCHILLING, Horst, D-50969 Köln (DE); FILGES, Ralf, D-51427 Bergisch Gladbach (DE)
(86) Internationale Anmeldenummer: EP0001098
(87) Internationale Veröffentlichungsnummer: WO00047926

(56) Entgegenhaltungen:
- EP-A- 0 681 097
- WO-A-89/03001
- US-A- 5 311 715

## Beschreibung

Die Erfindung betrifft einen Kompensator zum Ausgleich von Wärmedehnungen von heiße strömende Medien führenden Leitungen, insbesondere von bei Anlagen zur Herstellung von Zementklinker eingesetzten Gasleitungen mit Stahlblechmantel und Auskleidung aus Feuerfestmaterial und mit einem am Stahlblechmantel der Leitung angeordneten Wellrohrkompensator und mit einem in der Feuerfestauskleidung angeordneten Dehnungsspalt, der durch ein temperaturbeständiges elastisches Fugenmaterial ausgefüllt ist.

Anlagen zur Herstellung von Zementklinker aus Zementrohmehl weisen einen Drehrohrofen und einen diesem materialflußseitig gesehen vorgeschalteten Zyklonschwebegas-Wärmetauscher mit Calcinator auf. Dabei sind viele Leitungen, die heiße Medien führen, einer Wärmeausdehnung unterworfen, z. B. die als Calcinierstufe gestaltete Gassteigleitung, in welcher eine z. B. 850°C heiße Suspension von Drehofenabgas, Heißmehl, Brennstoff sowie ggf. Klinkerkühlerabluft als Tertiärluft von unten nach oben strömt. Derartige thermisch hochbelastete Leitungen müssen mit feuerfestem Material ausgekleidet sein.

Zum Ausgleich von Wärmeausdehnungen solcher thermisch hoch beanspruchter Leitungen, die oft in etwa vertikaler Position in hohen Gebäudekonstruktionen untergebracht bzw. aufgehängt sind, ist es bekannt, in die Leitungen Kompensatoren einzubauen. Dabei muß der Kompensator in der Lage sein, zum einen die unterschiedlichen Ausdehnungen zwischen dem Stahlblechmantel der Leitung und dem tragenden Gebäude und zum anderen die unterschiedlichen Ausdehnungen zwischen dem Stahlblechmantel und der Feuerfestauskleidung der Leitung auszugleichen. Bei nicht funktionierendem Dehnungsausgleich kann es z. B. vorkommen, daß die Auflagekonsolen bzw. Pratzen einer Leitung im oberen Bereich des Zyklonschwebegas-Wärmetauschergebäudes nicht mehr auf der Bühnenkonstruktion des Gebäudes aufliegen, was zu unkontrollierbaren und kritischen Belastungen des Gebäudes sowie der die heißen Medien führenden Leitungen und Anschlußteile führen kann.

Ein Grund für das nicht mehr richtige Funktionieren eines Kompensators der eingangs genannten Art ist, daß im Laufe der Zeit der in der heißen Suspension geförderte feinkörnige Feststoff wie heißes Zementrohmehl und/oder andere aggressive Medien von innen in den Dehnungsspalt der Feuerfestauskleidung, der bisher in der Ebene des metallischen Kompensatorwellrohres angeordnet gewesen ist, gelangen und von dort in das als elastische Dichtung dienende temperaturbeständige Fugenmaterial eindringen und dieses verhärten kann, wodurch die Elastizität des Fugenmateriales verloren geht. Daher ist es bisher notwendig gewesen, derartige Heißgasleitungen im Bereich des Kompensators von Zeit und Zeit zu warten, und zwar dadurch, daß in die Leitung Gerüste eingebracht werden mußten, um den Kompensator, speziell den Dehnungsspalt von innen inspizieren und warten zu können, was aber mit einem erheblichen Aufwand an Gerüstkosten sowie Arbeitskosten verbunden ist, es sei denn man hätte den Wellrohrkompensator vom Stahlblechmantel der Leitung in aufwendiger Weise ablösen müssen, wie das z.B. in der WO 89/03001 bei einer Abgasleitung von Gasturbinen offenbart ist.

Der Erfindung liegt daher die Aufgabe zugrunde, zum Ausgleich von Wärmedehnungen von insbesondere mit Feuerfestmaterial ausgekleideten Leitungen zur Führung heißer strömender Medien einen einfach zu wartenden und trotzdem nicht aufwendig gebauten Kompensator zu schaffen, dessen Funktionsfähigkeit, insbesondere was den Dehnungsspalt und dessen Fugenmaterial betrifft, jedenfalls nicht mehr vom Leitungsinneren her inspiziert werden muß.

Diese Aufgabe wird gemäß der Erfindung mit einem Kompensator mit den Merkmalen des Kennzeichnungsteils des Anspruchs 1 gelöst. Vorteilhafte Ausgestaltungen der Erfindung sind in den Unteransprüchen angegeben.

Charakteristisch für den erfindungsgemäßen Kompensator ist, daß der Dehnungsspalt für die Feuerfestauskleidung der Leitung, in die der Kompensator eingebaut ist, nicht mehr in der Querschnittsebene des Wellrohrkompensators für den Stahlblechmantel angeordnet ist, sondern zu dieser Querschnittsebene benachbart liegt, und daß der Stahlblechmantel im Bereich des Dehnungsspaltes für die Feuerfestauskleidung am Umfang geteilt ist, also z. B. aus einem aus Einzelteilen zusammengesetzten Profilrahmen besteht, so daß nach Lösen der lösbaren Verbindung der Stahlblechmantelteile, z. B. Profilrahmenteile, das elastische temperaturbeständige Fugenmaterial des Dehnungsspaltes von außerhalb der Leitung zum Zwecke der Inspektion und ggf. Erneuerung des elastischen Fugenmateriales bequem zugänglich ist. Bei einer etwa vertikal angeordneten Heißgasleitung wie z. B. der von unten nach oben von einer Heißgassuspension durchströmten Drehofenabgasleitung einer Zementklinkerproduktionslinie ist die Querschnittsebene des Dehnungsspaltes für die Feuerfestauskleidung mit Vorteil unterhalb der Querschnittsebene des Wellrohrkompensators für den Stahlblechmantel angeordnet, so daß der Innenraum des Wellrohrkompensators staubfrei bleibt.

Der im Bereich des Dehnungsspaltes für die Feuerfestauskleidung am Umfang geteilte Stahlblechmantel kann aus mehreren im Querschnitt nach außen offenen U-Profilen zu einem Profilrahmen zusammengesetzt sein. Zur Erleichterung der Demontage/Montage dieser im Querschnitt z. B. ein U-Profil aufweisenden Profilrahmenteil ist erfindungsgemäß vorgesehen, daß der (am Umfang nicht geteilte) Wellrohrkompensator für den Stahlblechmantel in seinem radial innen gelegenen Bereich um den Umfang verteilte quer zur Rohrwellung liegende, d. h. parallel zur Leitungsachse liegende Durchgangsbohrungen aufweist, durch die ein Spannmittel wie Schraubenbolzen hindurchführbar ist, mittels welchem die Rohrwellung des Wellrohrkompensators zusammenziehbar ist. Mit Hilfe dieser Spannvorrichtung wird das Ausbauen und Einbauen des im Bereich des Dehnungsspaltes für die Feuerfestauskleidung angeordneten am Umfang geteilten Profilrahmens erleichtert.

Die Erfindung und deren weitere Merkmale und Vorteile werden anhand des in den Figuren schematisch dargestellten Ausführungsbeispieles näher erläutert.

Es zeigt:
- Fig. 1:: ausschnittsweise eine typische Einbausituation für eine mit Feuerfestmaterial ausgekleidete Heißgasleitung einer Zementklinkerproduktionslinie, eingebaut in etwa vertikaler Position in einem hohen mehrstöckigen Gebäude mit mehreren Bühnen, mit einem als Einzelheit A angezeigten Kompensator zum Ausgleich von Wärmedehnungen, und
- Fig. 2:: die Einzelheit A der Fig. 1 in vergrößerter Darstellung.

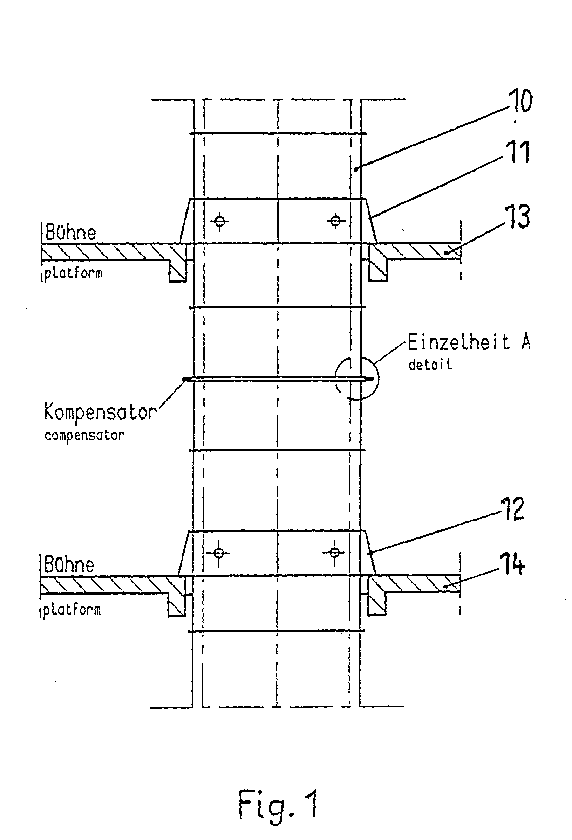

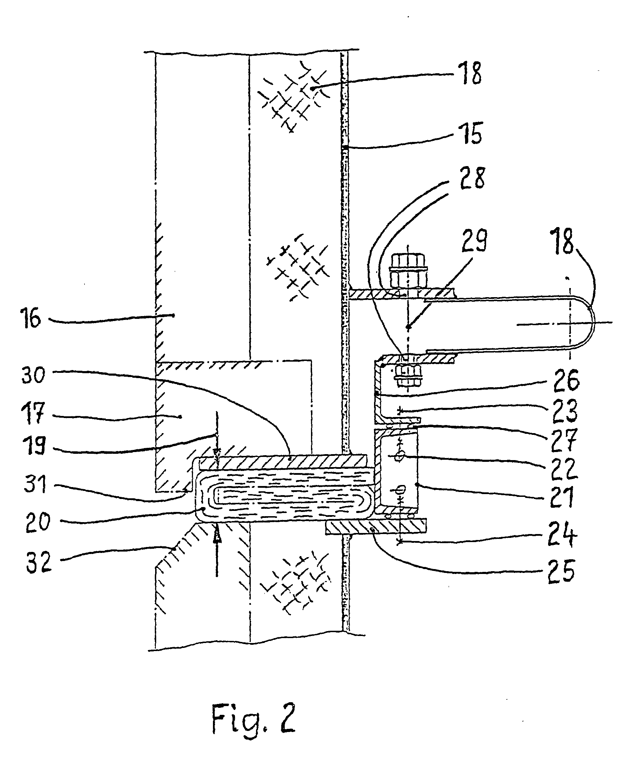

Nach Fig. 1 ist eine von unten nach oben von einer Heißgassuspension mit Drehofenabgas einer Temperatur von z. B. 800°C durchströmte feuerfest ausgekleidete Leitung 10 mittels Pratzen 11 und 12 in mehreren Bühnen 13 und 14 etc. einer hohen Gebäudekonstruktion eingebaut. Zum Ausgleich von Wärmedehnungen der Leitung 10 ist in dieser im Raum zwischen den Bühnen 13 und 14 ein Kompensator eingebaut, der im Detail in Fig. 2 dargestellt ist.

Nach Fig. 2 weist die Heißgasleitung 10 der Fig. 1 einen Stahlblechmantel 15 auf, der einen runden, rechteckigen, quadratischen oder vieleckigen Querschnitt aufweisen kann. Der Stahlblechmantel ist mit feuerfesten Steinen 16, 17 etc. sowie mit einer temperaturbeständigen Isolierung 18 ausgekleidet. In den Stahlblechmantel 15 ist ein metallischer Wellrohrkompensator 18 eingebaut. In der Feuerfestauskleidung ist ein Dehnungsspalt 19 angeordnet, der durch ein temperaturbeständiges elastisches Fugenmaterial, wie z. B. elastische Fasermatte 20, ausgefüllt ist.

Erfindungsgemäß ist der Dehnungsspalt 19 für die Feuerfestauskleidung in einer Leitungsquerschnittsebene angeordnet, die zur Querschnittsebene des Wellrohrkompensators 18 für den Stahlblechmantel 15 benachbart liegt. Im Ausführungsbeispiel der Fig. 2 liegt die Querschnittsebene des Dehnungsspaltes 19 unterhalb der Querschnittsebene des Wellrohrkompensators 18. Der Stahlblechmantel 15 ist im Bereich des Dehnungsspaltes 19 am Umfang geteilt, indem er gemäß zeichnerischem Ausführungsbeispiel nach Fig. 2 aus mehreren im Querschnitt nach außen offenen U-Profilen 21 zusammengesetzt ist. Die U-Profile 21, an deren stirnseitigen Enden Verbindungselemente 22 erkennbar sind, ergeben also zusammengesetzt einen Profilrahmen, dessen Teile über lösbare Verbindungen 23 und 24 mit dem Stahlblechmantel 15 verbunden sind. Dabei ist die lösbare Verbindung 24 mit einem nach außen vorstehenden Steg 25 des Stahlblechmantels 15 verbunden, während die lösbare Verbindung 23 mit einem Winkelteil 26 des Stahlblechmantels in Verbindung steht.

Der Dehnungsspalt 19 mit dem elastischen Fugenmaterial 20 wird erfindungsgemäß in der Weise inspiziert bzw. gewartet, daß nach Lösen der lösbaren Verbindungen 23 und 24 die U-Profile 21, an deren seitlichen Begrenzungswandungen noch Dichtungsschnüre 27 angeordnet sein können, demontiert werden, wonach der Dehnungsspalt samt Fugenmaterial von außen bequem zugänglich ist.

Der Wellrohrkompensator 18 für den Stahlblechmantel 15 weist in seinem radial innen gelegenen Bereich um den Umfang verteilte quer zur Rohrwellung bzw. parallel zur Leitungsmantelachse liegende Durchgangsbohrungen 28 auf, durch die ein Spannmittel wie Schraubenbolzen 29 hindurchführbar ist, mittels welchem die Rohrwellung des Wellrohrkompensators 18 zusammenziehbar ist. Auf diese Weise wird das am unteren Schenkel des Wellrohres 18 befestigte Winkelteil 26 nach oben gezogen, wodurch die Demontage/Montage der lösbar befestigten U-Profile 21 erleichtert wird.

Der Dehnungsspalt 19 für die Feuerfestauskleidung ist oben von einem am Stahlblechmantel 15 befestigten Steinhalteflansch 30 begrenzt zum Tragen der Feuerfestauskleidung 17 etc., die in ihrem dem Leitungsinneren zugewandten Dehnungsspaltbereich im Querschnitt betrachtet eine sich nach unten erstreckende Nase 31 als Anschlag für das von außen in den Dehnungsspalt einzuschiebende temperaturbeständige elastische Fugenmaterial 20, z. B. Fasermatte, aufweisen kann.

Die Feuerfestauskleidung kann außerdem am Dehnungsspalt an der der Anschlagnase 31 gegenüberliegenden Seite 32 eine derartige keilförmige Kontur aufweisen, daß sich der Dehnungsspalt 19 im Querschnitt gesehen zum Leitungsinneren hin stetig erweitert. Auf diese Weise wird erreicht, daß Staubablagerungen, die sich in diesem Bereich im Dehnungsspalt der Feuerfestauskleidung festsetzen sollten, bei Wärmedehnungen der Leitung selbsttätig aus dem Spalt wieder herausgequetscht werden können.

Die für den Schraubenbolzen (29) vorgesehene Öffnung im Wellrohrkompensator (18) kann auch für eine Messung des im Inneren der Leitung (10) herrschenden Unterdrucks genutzt werden. Die Höhe des gemessenen Unterdrucks läßt Rückschlüsse auf den Zustand des elastischen Fugenmaterials (20) zu.

Der erfindungsgemäße Dehnungskompensator ist für sämtliche mit Feuerfestmaterial ausgekleidete Leitungen anwendbar, z. B. auch für die sogenannten Tertiärluftleitungen, welche bei Zementklinkerbrennanlagen den Klinkerkühler mit dem Calcinator der Brennanlage verbinden.

## Patentansprüche

1. Kompensator zum Ausgleich von Wärmedehnungen von heiße strömende Medien führenden Leitungen, insbesondere von bei Anlagen zur Herstellung von Zementklinker eingesetzten Gasleitungen mit Stahlblechmantel (15) und Auskleidung aus Feuerfestmaterial und mit einem am Stahlblechmantel der Leitung angeordneten Wellrohrkompensator (18) und mit einem in der Feuerfestauskleidung angeordneten Dehnungsspalt (19), der durch ein temperaturbeständiges elastisches Fugenmaterial (20) ausgefüllt ist,
**gekennzeichnet durch** folgende Merkmale:
- der Dehnungsspalt (19) für die Feuerfestauskleidung ist in einer Leitungsquerschnittsebene angeordnet, die zur Querschnittsebene des Wellrohrkompensators (18) für den Stahlblechmantel (15) benachbart liegt;
- der Stahlblechmantel (15) ist im Bereich des Dehnungsspaltes (19) für die Feuerfestauskleidung am Umfang geteilt, und nach Lösen der lösbaren Verbindung (23, 24) der Stahlblechmantelteile (21) ist der Dehnungsspalt (19) bzw. das elastische temperaturbeständige Fugenmaterial (20) von außerhalb der Leitung zugänglich.

2. Kompensator nach Anspruch 1,
**dadurch gekennzeichnet, daß** die Querschnittsebene des Dehnungsspaltes (19) für die Feuerfestauskleidung unterhalb der Querschnittsebene des Wellrohrkompensators (18) für den Stahlblechmantel (15) angeordnet ist.

3. Kompensator nach Anspruch 1,
**dadurch gekennzeichnet, daß** der im Bereich des Dehnungsspaltes (19) für die Feuerfestauskleidung am Umfang geteilte Stahlblechmantel aus mehreren im Querschnitt nach außen offenen U-Profilen (21) zu einem Profilrahmen zusammengesetzt ist.

4. Kompensator nach einem oder mehreren der Ansprüche 1 bis 3,
**dadurch gekennzeichnet, daß** der Wellrohrkompensator (18) für den Stahlblechmantel (15) in seinem radial innen gelegenen Bereich um den Umfang verteilte quer zur Rohrwellung liegende Durchgangsbohrungen (28) aufweist, durch die ein Spannmittel wie Schraubenbolzen (29) hindurchführbar ist, mittels welchem die Rohrwellung des Wellrohrkompensators (18) zusammenziehbar ist.

5. Kompensator nach einem der Ansprüche 1 bis 4,
**dadurch gekennzeichnet, daß** der Dehnungsspalt (19) für die Feuerfestauskleidung oben von einem am Stahlblechmantel (15) befestigten Steinhaltefiansch (30) begrenzt ist zum Tragen der Feuerfestauskleidung (17), die in ihrem dem Leitungsinneren zugewandten Dehnungsspaltbereich im Querschnitt betrachtet eine sich nach unten erstreckende Nase (31) als Anschlag für das von außen in den Dehnungsspalt einzuschiebende temperaturbeständige elastische Fugenmaterial (20) aufweist.

6. Kompensator nach Anspruch 5,
**dadurch gekennzeichnet, daß** die Feuerfestauskleidung am Dehnungsspalt an der der Anschlagnase (31) gegenüberliegenden Seite (32) eine derartige Kontur aufweist, daß sich der Dehnungsspalt (19) im Querschnitt gesehen zum Leitungsinneren hin stetig erweitert.

7. Kompensator nach einem der Ansprüche 1 bis 6,
**dadurch gekennzeichnet, daß** das im Dehnungsspalt (19) angeordnete temperaturbeständige Fugenmaterial (20) aus einer elastischen Mineralfasermatte besteht.

## Claims

1. Compensator for compensating for thermal expansions of lines which conduct hot flowing media, in particular gas lines which are used in installations for producing cement clinker, having a sheet-steel casing (15) and a lining made of refractory material, and having a corrugated expansion pipe (18) arranged on the sheet-steel casing of the line, and having an expansion gap (19) which is arranged in the refractory lining and is filled by a temperature-resistant elastic jointing material (20), **characterized by** the following features:
- the expansion gap (19) for the refractory lining is arranged in a cross-sectional plane of the line which is adjacent to the cross-sectional plane of the corrugated expansion pipe (18) for the sheet-steel casing (15);
- the sheet-steel casing (15) is circumferentially split in the region of the expansion gap (19) for the refractory lining and, following release of the releasable connection (23, 24) of the sheet-steel-casing parts (21), the expansion gap (19) or the elastic temperature-resistant jointing material (20) is accessible from outside the line.

2. Compensator according to Claim 1, **characterized in that** the cross-sectional plane of the expansion gap (19) for the refractory lining is arranged beneath the cross-sectional plane of the corrugated expansion pipe (18) for the sheet-steel casing (15).

3. Compensator according to Claim 1, **characterized in that** the sheet-steel casing, which is circumferentially split in the region of the expansion gap (19) for the refractory lining, is assembled from a plurality of cross-sectionally outwardly open U-profiles (21) to form a profile frame.

4. Compensator according to one or more of Claims 1 to 3, **characterized in that**, in its radially inner region, the corrugated expansion pipe (18) for the sheet-steel casing (15) has circumferentially distributed through-passage bores (28) which are located transversely to the pipe corrugation and through which it is possible to guide a clamping means such as bolts (29), by means of which the corrugation of the corrugated expansion pipe (18) can be drawn together.

5. Compensator according to one of Claims 1 to 4, **characterized in that** the expansion gap (19) for the refractory lining is bounded at the top by a stone-retaining flange (30) which is fastened on the sheet-steel casing (15) and is intended for bearing the refractory lining (17), which, in its expansion-gap region which is directed towards the interior of the line, as seen in cross section, has a downwardly extending nose (31) as a stop for the temperature-resistant elastic jointing material (20) which is to be pushed into the expansion gap from the outside.

6. Compensator according to Claim 5, **characterized in that**, on the side (32) which is located opposite the stop nose (31), the refractory lining at the expansion gap has such a contour that the expansion gap (19) widens constantly in the direction of the interior of the line, as seen in cross section.

7. Compensator according to one of Claims 1 to 6, **characterized in that** the temperature-resistant jointing material (20) arranged in the expansion gap (19) consists of an elastic mineral fibre mat.

## Revendications

1. Compensateur pour la compensation de dilatations thermiques de conduites assurant l'écoulement de fluides chauds, en particulier de conduites de gaz utilisées dans des installations de clinker, avec une enveloppe en tôle d'acier (15) et un habillage en matériau ignifuge et avec un compensateur à tube ondulé (18) disposé sur l'enveloppe en tôle d'acier de la conduite et avec un interstice de dilatation (19) prévu dans l'habillage ignifuge, qui est rempli par un matériau de joint (20) élastique résistant à la température,
**caractérisé par** les caractéristiques suivantes :
- l'interstice de dilatation (19) pour l'habillage ignifuge est prévu dans un plan de section transversale de la conduite, qui est voisin du plan de section transversale du compensateur à tube ondulé (18) pour l'enveloppe en tôle d'acier (15) ;
- l'enveloppe en tôle d'acier (15) est divisée sur son pourtour dans la région de l'interstice de dilatation (19) pour l'habillage ignifuge, et après desserrage de la connexion desserrable (23, 24) des parties d'enveloppe en tôle d'acier (21), l'interstice de dilatation (19) ou le matériau de joint (20) élastique résistant à la température sont accessible depuis l'extérieur de la conduite.

2. Compensateur selon la revendication 1,
**caractérisé en ce que** le plan de section transversale de l'interstice de dilatation (19) pour l'habillage ignifuge est disposé sous le plan de section transversale du compensateur à tube ondulé (18) pour l'enveloppe en tôle d'acier (15).

3. Compensateur selon la revendication 1,
**caractérisé en ce que** l'enveloppe en tôle d'acier divisée sur son pourtour dans la région de l'interstice de dilatation (19) pour l'habillage ignifuge se compose de plusieurs profilés en U (21) ouverts vers l'extérieur en section transversale, pour former un cadre profilé.

4. Compensateur selon l'une quelconque ou plusieurs des revendications 1 à 3, **caractérisé en ce que** le compensateur à tube ondulé (18) pour l'enveloppe en tôle d'acier (15) présente, sur sa partie radialement interne, des alésages traversants (28) répartis sur son pourtour, et situés transversalement à l'ondulation du tube, à travers lesquels un moyen de serrage tel qu'un boulon fileté (29) peut être introduit, au moyen duquel l'ondulation du tube du compensateur à tube ondulé (18) peut être resserrée.

5. Compensateur selon l'une quelconque des revendications 1 à 4,
**caractérisé en ce que** l'interstice de dilatation (19) pour l'habillage ignifuge est limité en haut par une bride de fixation à la pierre (30) fixée à l'enveloppe en tôle d'acier (15), pour supporter l'habillage ignifuge (17) qui, considéré en section transversale dans sa région d'interstice de dilatation tournée vers l'intérieur de la conduite, présente un nez (31) s'étendant vers le bas servant de butée pour le matériau de joint (20) élastique résistant à la température devant être introduit dans l'interstice de dilatation depuis l'extérieur.

6. Compensateur selon la revendication 5,
**caractérisé en ce que** l'habillage ignifuge au niveau de l'interstice de dilatation du côté (32) opposé au nez de butée (31) présente un contour tel que l'interstice de dilatation (19) s'élargit progressivement en section transversale vers l'intérieur de la conduite.

7. Compensateur selon l'une quelconque des revendications 1 à 6,
**caractérisé en ce que** le matériau de joint (20) résistant à la température et disposé dans l'interstice de dilatation (19) se compose d'un tapis de fibres minérales élastique.
